# EUROPÄISCHE PATENTSCHRIFT

(11) **EP 2 952 303 B1**
(45) Veröffentlichungstag und Bekanntmachung des Hinweises auf die Patenterteilung: **11.10.2017**
(21) Anmeldenummer: 15168164.0
(22) Anmeldetag: 19.05.2015
(51) Int. Cl.: B25J 15/00, B25J 15/06, B29C 70/54

(54) **VERFAHREN ZUR HANDHABUNG VON FLEXIBLEN MATTENARTIGEN WERKSTÜCKEN**
METHOD FOR HANDLING FLEXIBLE MESH-LIKE WORKPIECES
PROCÉDÉ DE MANIPULATION DE PIÈCES SOUPLES DU TYPE MATELAS

(30) Priorität: 05.06.2014 DE 102014210748
(43) Veröffentlichungstag der Anmeldung: 09.12.2015
(73) Patentinhaber: J. Schmalz GmbH, 72293 Glatten (DE)
(72) Erfinder: Eisele, Thomas, 72275 Alpirsbach-Peterzell (DE); Kuolt, Harald, Dr., 78586 Deilingen (DE); Fritz, Florian, 72074 Tübingen (DE); Reinisch, Hermann, 72172 Sulz a. N/Hopfau (DE); Eberle, Marcus, 73457 Lauterburg (DE); Dunkmann, Walter, 76530 Baden-Baden (DE); Defranceski, Aline, 72160 Horb a N. (DE)
(74) Vertreter: DREISS Patentanwälte PartG mbB

(56) Entgegenhaltungen:
- DE-A1-102011 056 029
- DE-A1-102012 003 094
- DE-A1-102012 019 958
- DE-U1-202007 013 673

## Beschreibung

Die Erfindung betrifft ein Verfahren gemäß dem Oberbegriff des Anspruchs 1.

Hierbei werden Werkstücke mit einer Haltevorrichtung gehandhabt, die eine Mehrzahl von relativ zueinander beweglichen Greifvorrichtungen umfasst, deren räumliche Anordnung insgesamt an eine gewünschte Freiformfläche anpassbar ist. Solche Haltevorrichtungen können bei der Handhabung von flexiblen bzw. biegeschlaffen und/oder flächigen und/oder mattenartigen Werkstücken wie Halbzeugen (d.h. Zwischenprodukte bei Bearbeitungsschritten eines Erzeugnisses), Textilien, Fasermatten, Folien oder biegsamen Blechen Verwendung finden. So werden z.B. bei der Fertigung von Faserverbundteilen aus Schichten von flexiblen Fasermatten die zugeschnittenen schichtartigen Materialstücke aus einer in der Regel ebenen Ausgangskonfiguration aufgenommen und müssen in eine in der Regel dreidimensional gewölbte Zielform überführt werden.

Die Zielform ist z.B. durch einen Werkstückträger vorgegeben, in welchem z.B. eine weitere Bearbeitung erfolgen soll. Dies muss im Serienprozess präzise, reproduzierbar und zuverlässig erfolgen. Komplex aufgebaute Haltevorrichtungen mit jeweils individuell angetriebenen Stößeln können sich dabei als schwergängig, träge und teuer herausstellen. Bei Haltevorrichtungen mit zum Ablegen von Materialstücken in einen Werkstückträger verlagerbaren, eine Kontaktfläche bildenden Formungskörpern, wie beispielsweise aus der DE 10 2011 056 029 A1 bekannt, können in den Materialstücken hohe Spannungen entstehen. Dies kann zur Beschädigung der Materialstücke führen, so dass eine betriebssichere Handhabung nicht gewährleistet ist.

Verfahren gemäß dem Oberbegriff des Anspruch 1 sind auch in DE 10 2012 019958 A1 oder DE 20 2007 013673 U1 offenbart.

Der Erfindung liegt die Aufgabe zugrunde, die Werkstücke (z.B. flächige und/oder flexible Materialien) kontrolliert und zuverlässig in eine gewünschte Freiform zu bringen.

Die Erfindung löst die Aufgabe durch ein Verfahren mit den Merkmalen des Anspruchs 1. Dabei erfolgt ein Aufnehmen des Werkstücks aus einer Ausgangskonfiguration, welche insbesondere eben sein kann, und ein Verlagern der das Werkstück greifenden Greifvorrichtungen relativ zueinander zum Verformen des Werkstücks in eine gewünschte Freiform. Die Haltekraft vor und/oder während der Verlagerung der Greifvorrichtungen wird an einzelnen Greifvorrichtungen derart verringert oder deaktiviert, dass erste Abschnitte des Werkstücks bei dessen Verformen entlang der Anlagefläche verrutschen und zweite Abschnitte des Werkstücks mittels der Greifvorrichtungen an der Anlagefläche fixiert sind.

Dabei sind insbesondere zumindest einzelne der Greifvorrichtungen, vorzugsweise alle Greifvorrichtungen, beim Aufnehmen des Werkstücks aktiviert.

Durch das gezielten Bilden erster und zweiter Abschnitte lassen sich beim Verformen von Materialien, insbesondere von faserverstärkten Halbzeugen, unterschiedliche Haltekräfte in ein Werkstück einleiten, so dass eine konturtreue und reproduzierbare Werkstückverformung erreicht werden kann. Dabei werden definierte Bereiche des Werkstücks, nämlich zweite Abschnitte des Werkstücks, mittels der Greifvorrichtungen an der Anlagefläche fixiert und anderen Bereichen des Werkstücks, nämlich ersten Abschnitten des Werkstücks, wird durch geringere Haltekräfte ein Gleiten entlang einzelner Zonen der Anlagefläche ermöglicht. Auf diese Weise können Dehnungen und Stauchungen, welche zum Erreichen der gewünschten Kontur benötigt werden, gezielt ermöglicht werden.

Mit anderen Worten erfolgt ein gezieltes "Nicht-Halten" einzelner Zonen des Werkstücks, insbesondere erster Abschnitte des Werkstücks. Durch das Nachrutschen bestimmter Bereiche entlang der insgesamt gebildeten Greiffläche der Haltevorrichtung wird ein Durchbiegen der insgesamt gebildeten Greiffläche ermöglicht.

Grundsätzlich liegen an zumindest einigen der Greifvorrichtung in der anfänglichen Ausgangskonfiguration jeweils Kontaktabschnitte des Werkstückes an. Vorzugsweise wird für jede dieser Greifvorrichtungen die von dieser Greifvorrichtung ausgeübte Haltekraft vor und/oder während der Verlagerung in Abhängigkeit von der Länge des gewünschten Verrutschungs-Weges verringert, welchen der jeweilige Kontaktabschnitt durch Verrutschen entlang der Anlagefläche bei der Verformung in die gewünschte Freiform zurücklegen soll.

Insofern werden die Haltekräfte vorzugsweise derart eingeleitet, dass die jeweiligen Kontaktabschnitte um einen Weg verrutschen, der durch Steuerung der Haltekräfte vorgebbar ist. Dadurch ergeben sich zusätzliche Freiheitsgrade. Beispielsweise können bei einer gegebenen Verlagerung der Greifvorrichtungen durch unterschiedliche Einstellungen der Haltekräfte auch unterschiedliche resultierende Formen des Werkstückes und unterschiedliche Verrutschungs-Endzustände realisiert werden. Außerdem können je nach Einstellung der Haltekräfte gezielt Materialspannungen beim Verformen in das Werkstück eingebracht werden.

Konkret kann für einen bestimmten Kontaktabschnitt des Werkstückes ein Verrutschen um einen langen Weg erzielt werden, indem die anfangs auf diesen Kontaktabschnitt ausgeübte Haltekraft umso mehr verringert wird, je weiter der gewünschte Verrutschungs-Weg bei der Verformung ist. Insbesondere ist eine proportionale Verringerung der Haltekraft mit dem gewünschten Verrutschungs-Weg denkbar.

Die Greifvorrichtungen können durch Unterdrucksauger, elektroadhesive Greifer oder eine Kombination von Greifprinzipien, insbesondere einen Nadelgreifer, gebildet sein. In vorteilhafter Weise können die Greifvorrichtungen unabhängig voneinander aktivierbar und deaktivierbar sein. Damit sind die aufgebrachten Haltekräfte einstellbar. Auf diese Weise ist möglich, gezielt ausgewählte Bereiche der von den Greifvorrichtungen insgesamt bereitgestellten Greiffläche der Haltevorrichtung mit einer hohen oder einer geringen Haltekraft zu beaufschlagen. Damit können lokale Spannungsspitzen im flexiblen Werkstückmaterial vermieden werden. Die Haltekräfte sind unabhängig voneinander einstellbar und können während der Verlagerung der Greifvorrichtungen verändert werden, um ein Verrutschen von Abschnitten des Werkstücks zu ermöglichen. Zur Veränderung der Greifkraft oder Haltekraft der Greifvorrichtung kann eine Steuereinrichtung zur Ansteuerung der einzelnen Greifvorrichtungen vorgesehen sein. Die Steuereinrichtung kann beispielsweise mittels eines Bussystems mit den einzelnen Greifvorrichtungen kommunizieren.

In vorteilhafter Weise wird das Werkstück in einem weiteren Verfahrensschritt im verformten Zustand in einen Werkstückträger abgelegt. Dabei ist es von Vorteil, wenn der verformte Zustand des Werkstücks einer Zielform entspricht, die durch den Werkstückträger vorgegeben ist. Auf diese Weise lässt sich das Werkstück reproduzierbar und präzise in den Werkstückträger ablegen.

Im Konkreten sind die Greifvorrichtungen schwenkbar aneinander gekoppelt und werden zur Verlagerung gegeneinander verschwenkt. Durch die schwenkbare Kopplung der Greifvorrichtungen ist eine Leichtbaukonstruktion der Haltevorrichtung möglich. Die Verlagerung durch Verschwenken der Greifvorrichtungen durchzuführen trägt zu einer gleichmäßigen Verformung des Werkstücks bei.

Bei der Verlagerung der Greifvorrichtungen sind insbesondere diejenigen Greifvorrichtungen aktiviert, die am weitesten verlagert werden, d.h. bei welchen eine Verlagerung um den weitesten Verlagerungsweg erfolgt. Damit findet ausgehend von diesen Greifvorrichtungen eine Krafteinleitung in das zu verformende Werkstück statt. Dabei sind die Greifvorrichtungen entlang eines Verlagerungswegs zwischen einer Startposition und einer Endposition verlagerbar. Die Startposition kann der Position einer Greifvorrichtung in einer beispielsweise ebenen Ausgangskonfiguration entsprechen. Die Endposition kann einer Position der Greifvorrichtung entsprechen, in der die Gesamtheit der Greifvorrichtungen eine an eine Zielform angepasste oder angenäherte Anlagefläche bilden. Die Entfernung zwischen Startposition und Endposition der Greifvorrichtung stellt den Verlagerungsweg dar. Die am weitesten verlagerten Greifvorrichtungen sind mit den genannten zweiten Abschnitten des Werkstücks in Kontakt.

Die Greifvorrichtungen sind insbesondere unabhängig voneinander in ihrer Greifkraft veränderbar. Hierzu kann eine Steuereinrichtung zur Ansteuerung der einzelnen Greifvorrichtungen vorgesehen sein. Die Steuereinrichtung kann beispielsweise über ein Bussystem mit den einzelnen Greifvorrichtungen kommunizieren. Insofern ist es möglich, gezielt ausgewählte Bereiche der von den Greifvorrichtungen insgesamt bereitgestellten Greiffläche der Haltevorrichtung mit einer hohen oder einer geringen Haltekraft zu versehen. Dadurch kann ein Werkstück aus einer z.B. ebenen Ausgangskonfiguration aufgenommen werden und durch Verlagerung der einzelnen Trageelemente in eine gewünschte Form verformt werden. Um bestimmte Bereiche entlang der insgesamt gebildeten Greiffläche der Haltevorrichtung nachrutschen zu lassen, können gezielt einzelne Greifvorrichtungen aktiviert und deaktiviert werden. Damit können lokale Spannungsspitzen im flexiblen Material vermieden werden.

Die Erfindung wird im Folgenden anhand der Figuren näher erläutert. Es zeigen:
- Fig.1: Haltevorrichtung in perspektivischer Darstellung;
- Fig.2: perspektivische Ansicht auf die insgesamt gebildete Greiffläche der Haltevorrichtung gemäß Fig.1 in verschiedenen Konfigurationen;
- Fig.3: perspektivische Ansicht auf die Greiffläche einer Haltevorrichtung in verschiedenen Konfigurationen und mit aufgenommenem Werkstück; und
- Fig.4: Draufsicht auf die Greiffläche mit auf der Greiffläche aufgenommenem Werkstück in verschiedenen Konfigurationen.

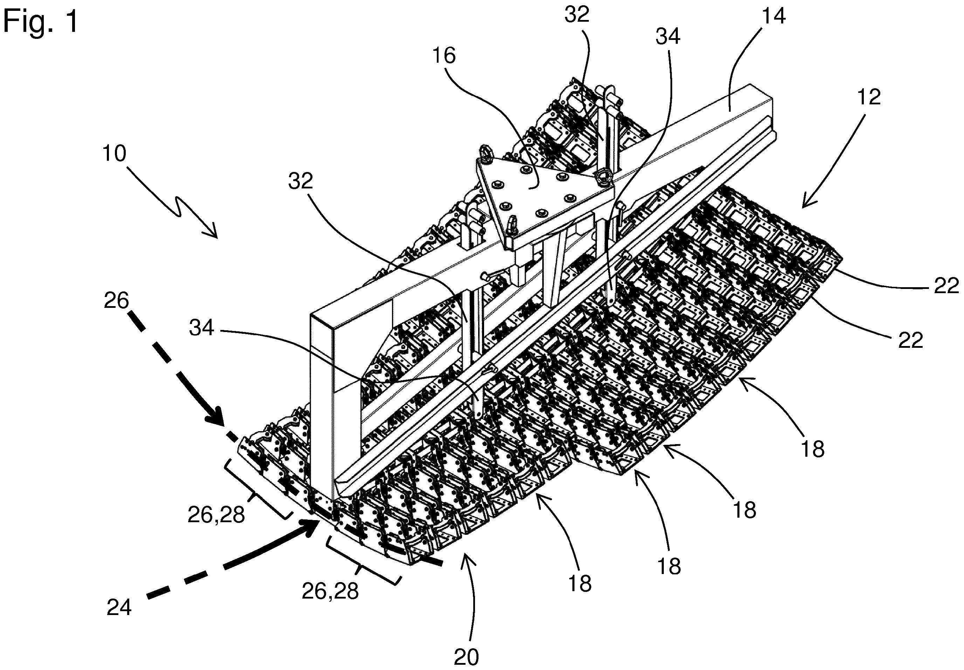

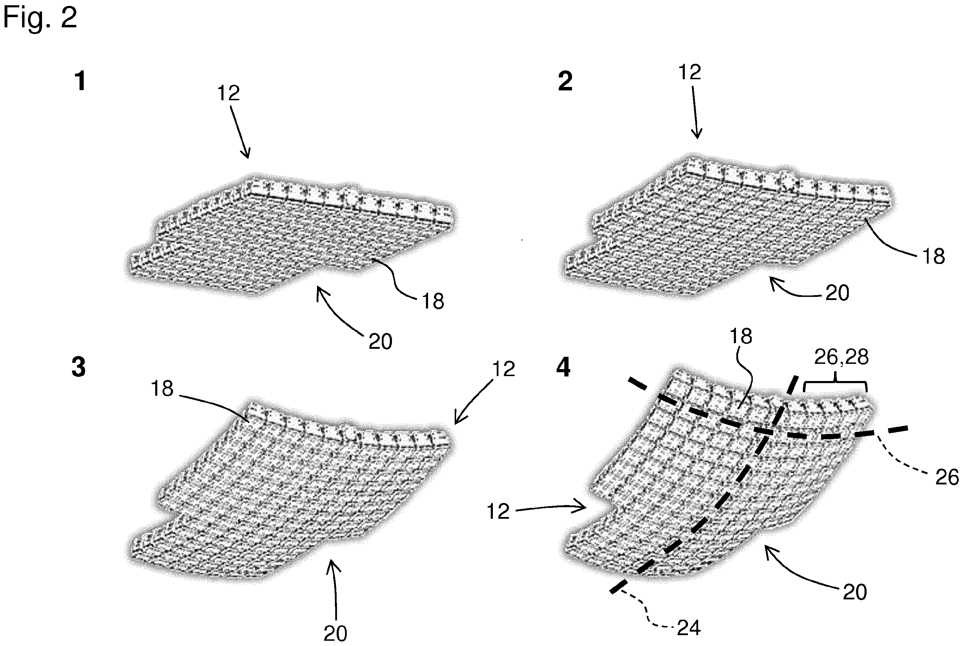

Das Verfahren zur Handhabung von flexiblen mattenartigen Werkstücken wird am Beispiel einer Haltevorrichtung 10 beschrieben (vgl. Figuren 1 und 2). Die Haltevorrichtung 10 weist eine im dargestellten Beispiel modular aufgebaute Tragestruktur 12 auf, welche von einem Grundgerüst 14 getragen ist. Das Grundgerüst 14 weist beispielsweise einen Verbindungsabschnitt 16 zur Anordnung der Haltevorrichtung 10 an einer Handhabungsvorrichtung auf, beispielsweise an einem Roboterarm oder dergleichen.

An der Tragestruktur 12 ist eine Vielzahl von Greifvorrichtungen 18 vorgesehen, welche relativ zueinander verlagerbar sind. Durch diese Verlagerung kann eine räumlich an eine gewünschte Freiformfläche anpassbare Greiffläche 20 oder Anlagefläche 20 der Haltevorrichtung 10 bereitgestellt werden.

Die formanpassbare Tragestruktur 12 umfasst eine Vielzahl von modularen Trageelementen 22, wobei in je einem Trageelement 22 eine Greifvorrichtung 18 angeordnet ist (nicht dargestellt). Die Trageelemente 22 sind beispielhaft jeweils in einer Reihe kettenartig miteinander verbunden, wobei verschiedene Ketten gebildet sind, nämlich eine sich im dargestellten Beispiel mittig durch die insgesamt gebildete Greiffläche 20 erstreckende Tragekette 24 und mehrere ausgehend von den Trageelementen 22 der Tragekette 24 gebildete Rippenketten 26. Die Rippenketten 26 bilden Rippenarme 28, welche sich beiderseits von den Trageelementen 22 der Tragekette 24 im Wesentlichen senkrecht zur Tragekette 24 wegerstrecken.

Die Trageelemente 22 der Tragekette 24 sind vorzugsweise über elastisch federnde Verbindungselemente miteinander verbunden. Somit werden bei einer aktiven Bewegung einzelner Trageelemente 22 der Tragekette 24 die jeweils benachbarten Trageelemente 22 elastisch mitgenommen. Somit kann eine kontinuierliche Form der Tragekette 24 erzielt werden, wobei hierzu wenige Aktuatoren ausreichen können. Beispielsweise sind in der Figur 1 zwei Aktuatoren 32 vorgesehen, welche jeweils einen zwischen dem Grundgerüst 14 und der Tragestruktur 12 wirkenden Aktuatorkolben 34 aufweisen. Jeder der Aktuatorkolben 34 greift an einem zugeordneten Anlenkpunkt an der Tragekette 24 an. Der Anlenkpunkt liegt zum Beispiel an einem der ausgewählten Trageelemente 22. Durch Ein- und Ausfahren des Aktuatorkolbens 34 wird das jeweilige Trageelement von dem Grundgerüst 14 weggedrückt oder zu diesem hingezogen. Aufgrund der elastischen Verbindungselemente zwischen den Trageelementen 22 (nicht dargestellt) werden die benachbarten Trageelemente 22 kontinuierlich mitgenommen.

Figur 2 zeigt verschiedene Ansichten auf die insgesamt gebildete Greiffläche 20 oder Anlagefläche 20 der Haltevorrichtung 10. Durch Verlagerung der einzelnen Greifvorrichtungen 18 relativ zueinander können verschiedene gewölbte und/oder gekrümmte Freiformflächen durch die Greiffläche 20 angenähert werden, das heißt die Greiffläche 20 kann an verschiedene Freiformflächen angepasst werden.

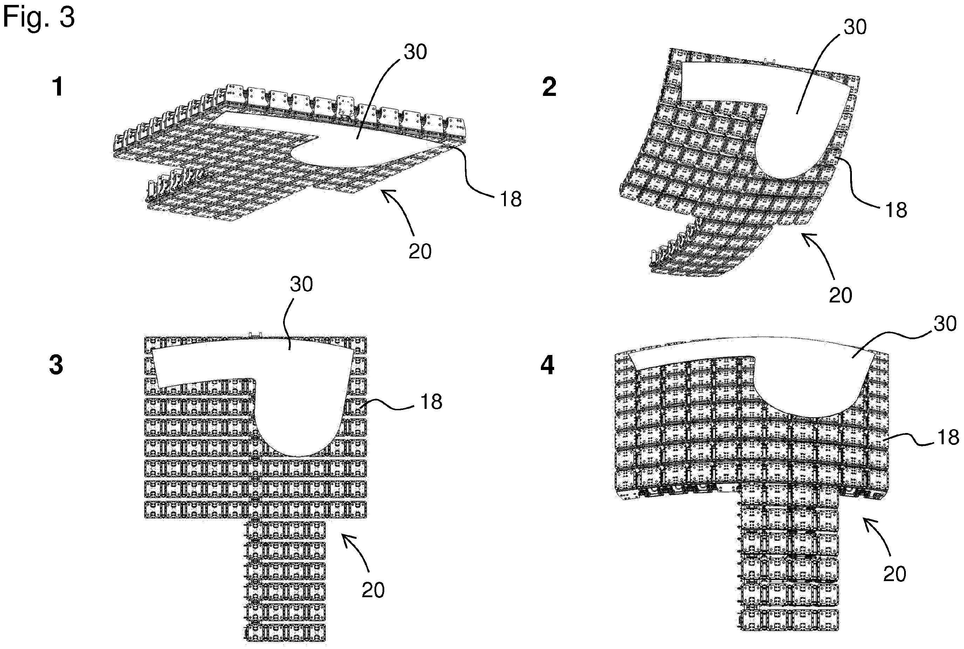

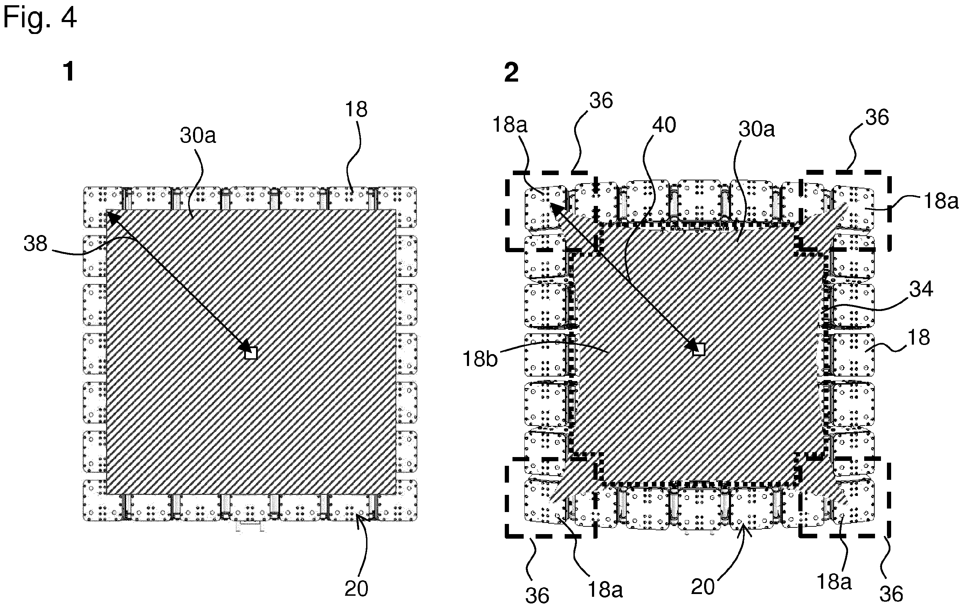

Das erfindungsgemäße Verfahren zur Handhabung von flexiblen mattenartigen Werkstücken 30 kann mit der Haltevorrichtung 10 ausgeführt werden und wird anhand der Figuren 3 und 4 erläutert. Die Greifvorrichtung 18 stellt durch Verlagerung relativ zueinander eine an eine Freiformfläche anpassbare Anlagefläche 20 bereit.

Das Werkstück 30 wird aus einer ebenen Ausgangskonfiguration aufgenommen (vgl. Darstellungen 1 und 2 in Figur 3). Dabei sind die Greifvorrichtungen 18 zumindest abschnittsweise aktiviert.

Anschließend werden die Greifvorrichtungen 18 zum Verformen des Werkstücks 30 relativ zueinander in eine gewünschte Freiform verlagert (siehe Darstellung 3 und 4 in Figur 3). Die Greifvorrichtungen 18 sind schwenkbar aneinander gekoppelt und werden zur Verlagerung verschwenkt.

Vor oder während der Verlagerung der Greifvorrichtung 18 wird die Haltekraft an einzelnen Greifvorrichtungen 18 derart verringert, dass erste Abschnitte 34 des Werkstücks 30 bei dessen Verformen entlang der Anlagefläche 20 verrutschen und zweite Abschnitte 36 des Werkstücks 30 mittels der Greifvorrichtungen an der Anlagefläche 20 fixiert sind (siehe Darstellung 2 in Fig.4).

Die Greifvorrichtungen 18 sind unabhängig voneinander aktivierbar und deaktivierbar. Im vorliegenden Beispiel sind die Greifvorrichtungen 18 als Unterdrucksauger ausgebildet.

Die einzelnen Greifvorrichtungen 18 sind jeweils entlang eines Verlagerungsweges verlagerbar. Bei der Verlagerung der Greifvorrichtungen 18 sind insbesondere diejenigen Greifvorrichtungen 18 aktiviert, die am weitesten verlagert werden. Der Verlagerungsweg ist die Entfernung zwischen einer Startposition, beispielsweise in einer ebenen Konfiguration der durch die Greifvorrichtung gebildeten Anlagefläche 20, und einer Endposition in einer an eine Zielform umgeformten Konfiguration der Anlagefläche 20.

In Fig. 4 ist die Verformung eines rechteckigen Werkstücks 30a gezeigt. Dabei kann es sich um eine Fasermatte handeln. Die Greifvorrichtungen 18 haben das Werkstück 30a in einer ebenen Ausgangskonfiguration aufgenommen (Fig. 4, Darstellung 1). Die Greifvorrichtungen 18 sind zumindest abschnittsweise aktiviert. Der Pfeil 38 veranschaulicht die Entfernung zwischen der Mitte des Werkstücks 30a und einer Ecke des Werkstücks 30a in der Ausgangskonfiguration.

Anschließend erfolgt eine Verlagerung der Greifvorrichtungen 18 (Fig. 4, Darstellung 2). Dabei sind diejenigen vom Werkstück 30a zumindest teilweise bedeckten Greifvorrichtungen 18a aktiviert, die am weitesten verlagert werden. Diese Greifvorrichtungen 18a befinden sich im dargestellten Beispiel an den Ecken des Werkstücks 30a. Die zweiten Abschnitte 36 des Werkstücks 30a sind mittels dieser Greifvorrichtungen 18a an der Anlagefläche 20 fixiert. Die zweiten Abschnitte 36 sind in den Eckbereichen des Werkstücks 30a angeordnet.

Bei den übrigen Greifvorrichtungen 18b ist die Haltekraft verringert, so dass erste Abschnitte 34 des Werkstücks 30a bei dessen Verformen entlang der Anlagefläche 20 verrutschen können. Bei den ersten Abschnitten 34 kann es sich um die durch das Werkstück 30a zumindest teilweise bedeckten Greifvorrichtungen 18b handeln, die nicht in den Ecken des Werkstücks 30a angeordnet sind. Der Pfeil 40 veranschaulicht die Entfernung zwischen der Mitte des Werkstücks 30a und einer Ecke des Werkstücks 30a in der Zielkonfiguration. Die Längenzunahme des Pfeils 40 gegenüber dem Pfeil 38 repräsentiert den Verlagerungsweg einer der aktivierten Greifvorrichtungen 18a.

## Patentansprüche

1. Verfahren zur Handhabung von flexiblen und/oder mattenartigen Werkstücken (30, 30a) mit einer Haltevorrichtung (10) umfassend eine Mehrzahl relativ zueinander verlagerbarer Greifvorrichtungen (18) zum Ausüben einer Haltekraft, wobei die Greifvorrichtungen (18) durch Verlagerung relativ zueinander eine an eine Freiformfläche anpassbare Anlagefläche (20) bereitstellen, das Verfahren umfassend folgende Schritte:
- Aufnehmen des Werkstücks (30, 30a) aus einer Ausgangskonfiguration mit aktivierten Greifvorrichtungen (18); und
- Verlagerung der Greifvorrichtungen (18) relativ zueinander zum Verformen des Werkstücks (30, 30a) in eine gewünschte Freiform,
**dadurch gekennzeichnet, dass** die Haltekraft vor und/oder während der Verlagerung der Greifvorrichtungen (18) an einzelnen Greifvorrichtungen (18) derart verringert wird, dass erste Abschnitte (34) des Werkstücks (30, 30a) bei dessen Verformen entlang der Anlagefläche (20) verrutschen und zweite Abschnitte (36) des Werkstücks (30, 30a) mittels der Greifvorrichtungen (18) an der Anlagefläche (20) fixiert sind.

2. Verfahren nach Anspruch 1, **dadurch gekennzeichnet, dass** für jede Greifvorrichtung (18), welche in der Ausgangskonfiguration an einem jeweiligen Kontaktabschnitt des Werkstück (30, 30a) anliegt, die von dieser Greifvorrichtung (18) ausgeübte Haltekraft vor und/oder während der Verlagerung in Abhängigkeit von der Länge des Weges verringert wird, welchen der jeweilige Kontaktabschnitt durch Verrutschen entlang der Anlagefläche (20) bei der Verformung in die gewünschte Freiform zurücklegt.

3. Verfahren nach dem Anspruch 2, **dadurch gekennzeichnet, dass** die ausgeübte Haltekraft einer in der Ausgangskonfiguration an einem Kontaktabschnitt anliegenden Greifvorrichtung (18) umso mehr verringert wird, je länger der gewünschte Weg ist, um welchen dieser Kontaktabschnitt bei der Verformung verrutschen soll.

4. Verfahren nach einem der voranstehenden Ansprüche, **dadurch gekennzeichnet, dass** die Greifvorrichtungen (18) unabhängig voneinander aktiviert und deaktiviert werden.

5. Verfahren nach einem der voranstehenden Ansprüche, **dadurch gekennzeichnet, dass** das Werkstück (30, 30a) im verformten Zustand in einen Werkstückträger abgelegt wird.

6. Verfahren nach einem der voranstehenden Ansprüche, **dadurch gekennzeichnet, dass** die Greifvorrichtungen (18) schwenkbar aneinander gekoppelt sind und zur Verlagerung relativ zueinander verschwenkt werden.

7. Verfahren nach einem der voranstehenden Ansprüche, **dadurch gekennzeichnet, dass** bei der Verlagerung der Greifvorrichtungen (18) diejeingen Greifvorrichtungen (18a) aktiviert sind, die am weitesten verlagert werden.

## Claims

1. A method for handling of flexible and/or mat-like workpieces (30, 30a) with a holding device (10) comprising a plurality of gripping devices (18) displaceable relatively to each other so as to exert a holding force, wherein the gripping devices (18) provide by the displacement relative to each other a contact surface (20) that is adjustable to a free-form surface, the method comprising the following steps:
- picking up the workpiece (30, 30a) from an initial configuration with activated gripping devices (18); and
- displacing the gripping devices (18) relative to each other to deform the workpiece (30, 30a) into a desired freeform,
**characterized in that** the holding force is reduced at individual gripping devices (18) before and/or during the displacement of the gripping devices (18) such that first sections (34) of the workpiece (30, 30a) during its deformation slide along the contact surface (20) and second sections (36) of the workpiece (30, 30a) are fixed by means of the gripping devices (18) on the contact surface (20).

2. The method according to claim 1, **characterized in that** for each gripping device (18) which abuts in the initial configuration to a respective contact section of the workpiece (30, 30a), the exerted holding force before and/or during the displacement is reduced in dependence on the length of the path, which the respective contact section travels by sliding along the contact surface (20) during the deformation into the desired freeform.

3. The method according to claim 2, **characterized in that** the exerted holding force of a gripping device (18) abutting in its initial configuration to a contact section is reduced the more, the longer the desired path by which this contact section is to slide during the deformation.

4. The method according to one of the preceding claims, **characterized in that** the gripping devices (18) are activated and deactivated independently of one another.

5. The method according to one of the preceding claims, **characterized in that** the workpiece (30, 30a) is stored in the deformed state in a workpiece carrier.

6. The method according to one of the preceding claims, **characterized in that** the gripping devices (18) are pivotally coupled to one another and are pivoted to be displaced relative to each other.

7. The method according to one of the preceding claims, **characterized in that** during the displacement of the gripping devices (18) those gripping devices (18a) are activated, which are displaced furthest.

## Revendications

1. Procédé de manipulation de pièces flexibles et/ou de type matelas (30, 30a) avec un dispositif de maintien (10) comprenant un ensemble de dispositifs de préhension (18) pouvant être déplacés les uns par rapport aux autres pour exercer une force de maintien, les dispositifs de préhension (18) permettant d'obtenir, par déplacement les uns par rapport aux autres, une surface d'appui (20) pouvant être adaptée à une surface de forme libre, ce procédé comprenant les étapes suivantes consistant à:
- prendre la pièce (30, 30a) à partir d'une configuration de départ avec des dispositifs de préhension (18) activés, et
- déplacer les dispositifs de préhension (18) les uns par rapport aux autres pour déformer la pièce (30, 30a) selon une forme libre souhaitée,
**caractérisé en ce que** la force de maintien est, avant et/ou après le déplacement des dispositifs de préhension (18), diminuée sur certains dispositifs de préhension (18) de sorte que pendant la déformation, des premiers segments (34) de la pièce (30, 30a) glissent le long de la surface d'appui (20) et que des seconds segments (36) de la pièce (30, 30a) soient fixés à la surface d'appui (20) au moyen des dispositifs de préhension (18).

2. Procédé conforme à la revendication 1, **caractérisé en ce que** pour chaque dispositif de préhension (18) qui s'applique dans la configuration de départ sur un segment de contact respectif de la pièce (30, 30a), la force de maintien exercée par ce dispositif de préhension (18) est avant et/ou pendant le déplacement diminuée en fonction de la longueur du chemin que le segment de contact respectif parcourt par glissement le long de la surface d'appui (20) lors de la déformation, dans la forme libre souhaitée.

3. Procédé conforme à la revendication 2, **caractérisé en ce que** la force de maintien exercée par un dispositif de préhension (18) s'appuyant dans la configuration de départ sur un segment de contact est d'autant plus diminuée que le chemin souhaité, sur lequel ce segment de contact doit glisser lors de la déformation est long.

4. Procédé conforme à l'une des revendications précédentes, **caractérisé en ce que** les dispositifs de préhension (18) sont activés et désactivés indépendamment les uns des autres.

5. Procédé conforme à l'une des revendications précédentes, **caractérisé en ce qu'**à l'état déformé, la pièce (30, 30a) est déposée dans un support de pièces.

6. Procédé conforme à l'une des revendications précédentes, **caractérisé en ce que** les dispositifs de préhension (18) sont accouplés de manière à pouvoir pivoter les uns par rapport aux autres et pivotent les uns par rapport aux autres pour permettre le déplacement.

7. Procédé conforme à l'une des revendications précédentes, **caractérisé en ce que** lors du déplacement des dispositifs de préhension (18), ou activé les dispositifs de préhension (18a) qui sont le plus déplacés.
